**Europäisches Patentamt**

**European Patent Office**

**Office européen des brevets**

(11) Numéro de publication: **0 041 010**
**B2**

(12) **NOUVEAU FASCICULE DE BREVET EUROPÉEN**

(45) Date de publication du nouveau fascicule du brevet:
**25.01.89**

(21) Numéro de dépôt: **81400781.1**

(22) Date de dépôt: **19.05.81**

(51) Int. Cl.⁴: **C 03 C 17/23**

(54) Fabrication d'un verre revêtu d'un film d'oxydes métalliques.

(30) Priorité: **28.05.80 JP 71217/80**

(43) Date de publication de la demande:
**02.12.81 Bulletin 81/48**

(45) Mention de la délivrance du brevet:
**10.10.84 Bulletin 84/41**

(45) Mention de la decision concernant l'opposition:
**25.01.89 Bulletin 89/4**

(84) Etats contractants désignés:
**AT BE CH DE FR GB IT LI LU NL SE**

(56) Documents cité:
**EP-A-0 006 064**
**FR-A-2 046 320**
**FR-A-2 277 048**
**FR-A-2 277 049**
**US-A-3 081 200**
**US-A-3 996 035**
**US-A-4 240 816**

**DERWENT, Japanese Patents Report, vol. T, no. 45**

(73) Titulaire: **SAINT- GOBAIN VITRAGE, Les Miroirs 18, avenue d'Alsace, F-92400 Courbevoie (FR)**

(72) Inventeur: **Kawahara, Hideo, 205- 3, 8, Minami Sakurazura, Toyonaka- shi Osaka Fu (JP)**

(74) Mandataire: **Eudes, Marcel, Saint- Gobain Recherche 39 Quai Lucien Lefranc, F-93304 Aubervilliers Cedex (FR)**

EP 0 041 010 B2

## Description

La présente invention concerne le dépôt d'un film d'oxydes métalliques sur du verre. Plus précisément, elle porte sur le revêtement du verre porté à haute température à l'aide de composés métalliques en poudre, notamment des organo-métalliques, décomposables on oxydes métalliques nous l'action de la chaleur.

Il est connu depuis longtemps de recouvrir le verre de films d'oxydes de métaux tels que Fe, Cr, Co, Ti, etc., pour lui conférer des caractéristiques optiques particulières, pour rendre sa surface plus résistante (renforcement de bouteilles) ou pour le décorer.

Différentes méthodes peuvent être utilisées pour obtenir de tels dépôts: la pulvérisation d'une solution, la vaporisation des composés métalliques, la pulvérisation cathodique, etc., et parmi toutes ces méthodes, au niveau industriel, c'est la pulvérisation d'une solution qui a été le plus largement appliquée.

Une telle pulvérisation de solution est décrite dans le brevet US-A-3 996 035 en combinaison avec un traitement ultérieur de trempe, le verre après revêtement étant réchauffé à une température de l'ordre de 660°C en vue de la trempe.

Une telle pulvérisation de solution est également décrite dans le brevet FR-A-2 046 320, l'obtention de couches épaisses pouvant être obtenue par dépôts successifs à l'aide de moyens de projection successifs disposés dans des enceintes de projection séparées réparties le long du trajet du verre.

Toutefois, cette méthode de pulvérisation sur le verre porté à haute température, d'une solution de composés métalliques présente certains inconvénients:

difficulté pour obtenir un film uniforme sur la surface d'un verre entraîné rapidemment,
- refroidissement brutal d'où éventuellement casse du verre,
- inflammabilité des solvants,
- dispersion des vapeurs de solvant.

A cause de cela, on s'est tourné ces dernières années vers des composés métalliques en poudre, la poudre véhiculée par un gaz porteur étant dirigée sur le verre porté à haute température comme décrit dans le brevet japonais 4 721 418.

En outre, du fait de la plus faible baisse de température du verre au contact de la poudre en suspension dans un gaz, l'adhérence des films métalliques obtenus par cette méthode est meilleure.

Pour distribuer sur le verre la poudre en suspension dans un courant gazeux, on peut, de la même façon que pour la pulvérisation de solutions, employer un pulvérisateur animé d'un mouvement de va et vient dans une direction perpendiculaire à la direction d'avancement du verre. Mais, comme déjà dit, il est difficile d'obtenir un film uniforme si le verre défile trop rapidement.

C'est pourquoi on préfère souffler les composés métalliques en poudre, en suspension dans l'air, sur le verre en mouvement à partir d'une buse fixe, disposée transversalement à la direction d'avancement du verre, dont l'orifice de sortie est une fente calibrée s'étendant sur toute la largeur du ruban de verre, comme décrit dans le document de brevet EP-0 006 064.

Il est connu par le document EP- 0 006 064 déjà cité, d'effectuer deux projections successives d'une même poudre avec deux buses disposées en parallèle pour permettre dans chaque buse une bonne homogénéisation de la poudre dans son gaz porteur; le mélange de quantités trop importantes de poudres en une seule fois pouvant poser problème et nuire à la qualité du mélange et donc en fin de compte à la qualité du revêtement sur le substrat.

Il est par ailleurs connu par le document de brevet FR-A-2 277 048 de réchauffer le ruban de verre après son revêtement par une couche d'oxyde métallique qui est formée par projection sur le verre chaud d'un composé métallique en poudre décomposable en oxyde sous l'action de la chaleur.

Il est également connu par ce document FR-A-2 277 048 d'effectuer plusieurs dépôts successifs de poudre sur un même substrat pour obtenir le revêtement désiré, mais aucun réchauffage intermédiaire n'est prévu.

Il est aussi connu par le document de brevet US-3 081 200 d'effectuer des pluralités de projections de poudre en suspension dans un gaz porteur sur des substrats réfractaires non poreux tel l'alumine à des températures supérieures à 500°C comprises entre 500°C et 1000°C.

On constate que lorsqu'on utilise le procédé de dépôt faisant appel à des poudres, un mélange d'acétylacétonates de fer et de chrome dans la proportion pondérale de 3 à 1, à une température d'environ 600°C, plus le revêtement est épais, plus sa résistance est faible (voir tableau 1 suivant):

| Nature de l'échantillon testé | teneur en métaux des films en µg/cm² | nombre de jours passés jusqu'au décollement des films lorsque l'échantillon est trempé dans uns solution normale de HCl à 20°C |
|---|---|---|
| verre revêtu d'un film mince | 10,5 | 20 jours |
| verre revêtu d'un film d'épaisseur moyenne | 13,4 | 4 à 15 jours |
| verre revêtu d'un film épais | 15,7 | 1 à 10 jours |

La présente invention vise à remédier à de tels défauts constatés avec des revêtements épais. Pour cela elle propose un procédé de fabrication de verre revêtu d'un film d'oxydes métalliques par projection sur la surface du verre de composés métalliques en poudre, se décomposant en oxydes par la chaleur, en suspension dans un courant gazeux, dans lequel le verre après revêtement est acheminé dans une enceinte de recuisson où il se refroidit progressivement au fur et à mesure qu'il progresse, caractérisé en ce que l'on effectue une première projection de poudre, puis on réchauffe le verre avant d'effectuer une seconde projection de poudre.

Dans la mesure où une épaisseur importante de revêtement du verre est désirée, on effectue une première projection de poudre formant ainsi une première épaisseur de revêtement, on réchauffage verre et on effectué une seconde projection de poudre formant une autre épaisseur de revêtement superposée à la première.

Pour obtenir des couches très épaisses, on peut ainsi procéder à une pluralité de projections et réchauflages successifs.

L'invention propose également un dispositif pour mettre en oeuvre le procédé, comportant une pluralité de chambres de revêtement équipées chacune de moyens de projection de composés destinés au revêtement du verre, lesdits moyens s'étendant transversalement sur toute la largeur du verre, ce dispositif étant caractérisé en ce qu'il possède des moyens de réchauffage intercalés entre lesdites chambres.

Ainsi, en procédant selon l'invention on peut améliorer la qualité d'un film par réchauffage du verre entre deux dépôts, ou obtenir des épaisseurs importantes, très résistantes, par dépôts successifs avec réchauffage intermédiaire du verre entre deux dépôts.

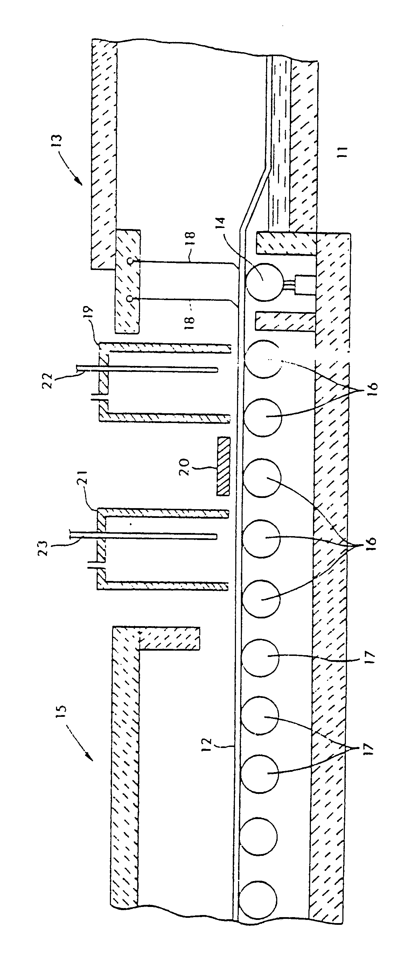

L'invention sera maintenant décrite plus en détail en référence à la figure jointe qui repésente une vue schématique d'une installation de revêtement de verre à la sortie d'un four de flottage.

La figure montre une installation de fabrication de verre dans laquelle on fait couler du verre fondu, à débit constant, sur un bain de métal fondu 11, on fait avancer le verre sur ce bain de métal 11, on forme une couche de verre qu'on extraît du bain 11 à l'aide d'un rouleau extracteur 14 pour former un ruban de verre 12 qu'on transporte sur des rouleaux convoyeurs 16, on introduit ce ruban 12 à l'intereur d'un four de recussion 15 sur des rouleaux d'entraînement 17. Le ruban de verre 12 se refroidit progressivement au fur et à mesure qu'il progresse sur les rouleaux 17 du four 15. Un double rideau d'amiante 18 est suspendu au plafond 13 du réservoir de métal fondu, pour isoler l'atmosphère gazeuse du réservoir de métal fondu de l'extérieur.

Entre le rideau 18 et l'entrée du four de recuisson 15, on dispose une première chambre de revêtement 19, des moyens 20 de réchauffage du verre, par exemple des moyens électriques, et une seconde chambre de revêtement 21, ces différents éléments se succédant dans cet ordre du bain de métal fondu au four de recussion.

Dans chaque chambre de revêtement 19, 21 est disposée transversalement à la direction d'avancement du verre une buse à fente 22, 23 destinée à projeter sur la surface supérieure du ruban de verre 12 des composés métalliques en poudre.

Le dispositif précédement décrit fonctionne de la façon décrite ci-après:

Un ruban de verre, par exemple de 4 mm d'épaisseur, est fourni par l'installation de flottage et il est entraîné vers le four de recuisson 15 à une vitesse qui est par exemple de 7 m/mn.

De l'air contenant en suspension une poudre à 75 % en poids d'acétylacétonate de fer d'une granulométrie de 10 à 45 µm (granulométrie moyenne 23 µm) et 25 % d'acétylacétonate de chrome de même granulométrie est soufflé sur la surface du verre 12 à température de 587°C, à travers la fente de la première buse 22 dans la première chambre de revêtement 19. Le débit de l'air soufflé est de 10 Nm³/mn par mètre de longueur de la buse. A la sortie de la chambre 19, le ruban de verre 12 est réchauffé par les moyens électriques de chauffage 20, il continue son défilement et passe dans la seconde chambre de revêtement 21. Là, sa température est de 556°C. La buse 23 installée dans cette seconde chambre de revêtement 21 projette sur le verre de la poudre d'acétylacétonate de fer et de chrome de la même granulométrie et avec le même taux pondéral de mélange que précédemment, au même débit que précédemment.

A la sortie de cette seconde chambre de revêtement 21, le verre est introduit dans le four de recuisson 15, refroidi progressivement, puis découpé aux dimensions voulues.

A titre de comparaison, on a effectué les essais suivants:

On a préparé différents verres A, B, C, D, E, F, G, H, I, J, revêtus de films d'oxydes métalliques de différentes épaisseurs, les différentes épaisseurs de revêtement étant obtenues en modifiant la quantité de poudre en suspension dans l'air soufflé par la buse 22 ou les buses 22 et 23.

Pour les échantillons A, B, C, D, on a déposé le revêtement comme décrit dans l'invention, c'est-à-dire en deux couches superposées, d'abord en projetant une première couche avec la buse 22, puis en réchauffant le verra avec les moyens 20, puis en déposant une seconde couche avec la buse 23.

Pour fabriquer les échantillons E, F, G, H, on a déposé le revêtement en une seule couche en n'utilisant que la buse 22, mais en réchauffant le verre après dépôt à l'aide des moyens de chauffage 20.

Pour fabriquer les échantillons I, J, on a encore déposé le revêtement en une seule couche en n'utilisant que la buse 22, et on n'a pas utilisé le moyen de chauffage 20.

Les différents échantillons fabriqués sont trempés jusqu'à décollement du revêtement, soit dans une solution normale de HCl à 20°C soit dans une solution à 1 % de HF à 20°C.

Le tableau ci-après montre que la résistance la meilleure est obtenue lorsque le revêtement est déposé en plusieurs fois avec réchauffage du verre entre deux dépôts successifs (échantillons A, B, C, D). Cependant, même lorsque le dépôt est effectué en une seule fois, un réchauffage du verre après dépôt du film renforce sa résistance (échantillons E, F, G, H). Lorsque le film est déposé en une seule fois, sans réchauffage du verre, la résistance du film est moins bonne que dans les deux autres cas (échantillons I, J). Les résultats de ces différents tests sont résumés sur le tableau en annexe.

**Résultats des épreuves à l'endurance**

| échantillons | buse 22 débit poudre en g/mn | débit d'air en Nm³/mn | réchauffage 20 | buse 23 débit poudre en g/mn | débit d'air en Nm³/mn | teneur en métaux des films en µg/cm² | nombre de jours jusqu'au décollement des films dans HCl N à 20°C | nombre de jours jusqu'au décollement des films dans HF à 1 % à 20°C |
|---|---|---|---|---|---|---|---|---|
| A | 10 | 10 | utilisé | 10 | 10 | 9,8 | plus de 40 jours | 38 à 42 heures |
| B | 15 | 10 | utilisé | 15 | 10 | 13,4 | plus de 40 jours | 38 à 42 heures |
| C | 18 | 10 | utilisé | 18 | 10 | 15,4 | plus de 40 jours | 38 à 42 heures |
| D | 21 | 10 | utilisé | 21 | 10 | 18,0 | plus de 40 jours | 38 à 42 heures |
| E | 25 | 15 | utilisé | | | 10,0 | 32 jours | 12 à 18 heures |
| F | 30 | 15 | utilisé | | | 12,8 | 24 jours | 6 à 12 heures |
| G | 35 | 15 | utilisé | | | 13,6 | 16 jours | 3 à 6 heures |
| H | 40 | 15 | utilisé | | | 16,6 | 18 jours | 3 à 6 heures |
| I | 25 | 15 | non-utilisé | | | 9,9 | 20 jours | inférieur à 1 heure |
| J | 35 | 15 | non-utilisé | | | 14,1 | 12 jours | inférieur à 1 heure |

**Revendications**

1. Procédé de fabrication d'un verre revêtu d'un film d'oxydes métalliques par projection sur le verre de composés métalliques en poudre se décomposant en oxydes à la chaleur, en suspension dans un courant gazeux, dans lequel le verre après revêtement est acheminé dans une enceinte de recuisson ou il se refroidit progressivement au fur et à mesure qu'il progresse, caractérisé en ce que l'on effectue une première projection de poudre puis on réchauffe le verre avant d'effectuer une seconde projection de poudre.

2. Procédé selon la revendication 1, caractérisé en ce que la température de réchauffage du verre est de l'ordre de 556°C, la poudre étant de l'acétylacétonate de fer et de chrome.

3. Dispositif pour mettre en oeuvre le procédé selon l'une des revendications 1 ou 2, comportant une pluralité de chambres de revêtement (19, 21) équipées chacunes de moyens (22, 23) de projection de composés destinés au revêtement du verre, lesdits moyens s'étendant transversalement sur toute la largeur du verre, caractérisé en ce qu'il possède des moyens (20) de réchauffage du verre intercalés entre lesdites chambres (19 et 21).

**Patentansprüche**

1. Verfahren zur Herstellung eines mit einem Metalloxidfilm beschichteten Glases durch Aufbringen von pulverförmigen Metallverbindungen auf das Glas, welche sich in Suspension in einem Gasstrom befinden und sich unter Wärme zu Oxiden zersetzen, bei welchem das Glas nach Beschichtung in einen Wärmebehandlungsofen befördert wird, wo es sich entsprechend der Geschwindigkeit des Vorrückens allmählich abkühlt, dadurch gekennzeichnet, daß ein erstes Aufbringen des Pulvers erfolgt, danach das Glas wieder erwärmt wird und anschließend ein zweites Aufbringen des Pulvers auf das Glas erfolgt.

2. Verfahren nach Anspruch 1, dadurch gekennzeichnet, daß die Temperatur der Wiedererwärmung des Glases in der Größenordnung von 556° liegt und das Pulver aus Acetylacetonat von Eisen und Chrom besteht.

3. Vorrichtung zur Durchführung des Verfahrens nach einem der Ansprüche 1 oder 2, mit einer Anzahl von Beschichtungskammern (19, 21), welche jede mit Einrichtungen (22, 23) zum Aufbringen von Verbindungen zur Beschichtung von Glas ausgerüstet sind, welche sich quer über die gesamte Breite des Glases erstrecken, dadurch <u>gekennzeichnet</u>, daß die Vorrichtung Einrichtungen (20) zur Wiedererwärmung des Glases besitzt, welche zwischen den Kammern (19, 21) angeordnet sind.

## Claims

1. Method of making glass coated with a film of metal oxides by projection on to the glass of metallic compounds which decompose to oxides under the action of heat, in powder form, in suspension in a gaseous flow, in which the glass after coating is moved in a heated enclosure in which it is cooled progressively as it moves, characterised in that there is carried out a first projection of powder and the glass is then reheated before carrying out a second projection of powder.

2. Method according to claim 1, characterised in that the temperature to which the glass is reheated is of the order of 556° C, the powder being iron and chromium acetylacetonate.

3. Device for carrying out a method according to claim 1 or 2, comprising a plurality of chambers for coating (19, 21) each provided with means (22, 23) for projecting compounds intended to coat the glass, said means extending transversely over the whole width of the glass, characterised in that it has means (20) for reheating the glass between said chambers (19 and 21).